Europäisches Patentamt

**European Patent Office**

**Office européen des brevets**

(19)

(11) Numéro de publication : **0 156 662**
**B1**

(12) FASCICULE DE BREVET EUROPÉEN

(45) Date de publication du fascicule du brevet :
**11.01.89**

(51) Int. Cl.⁴ : **A 01 G 25/16**

(21) Numéro de dépôt : **85400206.0**

(22) Date de dépôt : **07.02.85**

(54) **Procédé et dispositif de commande automatique de l'irrigation de végétaux.**

(30) Priorité : **09.02.84 FR 8402020**

(43) Date de publication de la demande :
**02.10.85 Bulletin 85/40**

(45) Mention de la délivrance du brevet :
**11.01.89 Bulletin 89/02**

(84) Etats contractants désignés :
**AT BE CH DE FR GB IT LI LU NL SE**

(56) Documents cités :
**SU-A-- 252 340**
**UNITED STATES DEPARTMENT OF AGRICULTURE,**
**AGRICULTURAL RESEARCH SERVICE, 1983; "Pumping air through leaves indicates plant stress"**

(73) Titulaire : **INSTITUT NATIONAL DE LA RECHERCHE AGRONOMIQUE (INRA)**
**145, rue de l'Université**
**F-75341 Paris Cédéx 07 (FR)**

(72) Inventeur : **Huguet, Jean Gérard**
**1, rue Edouard Manet Les Orchidées 3**
**F-84130 Le Pontet (FR)**
Inventeur : **Jaussely, Bernard**
**36, Avenue Agricol Perdiguier**
**F-84310 Morieres les Avignon (FR)**

(74) Mandataire : **Phélip, Bruno et al**
**c/o Cabinet Harlé & Phélip 21, rue de La Rochefoucauld**
**F-75009 Paris (FR)**

## Description

La présente invention est relative à un nouveau procédé de commande de l'irrigation.

On sait depuis longtemps décider le moment d'irriguer une parcelle de terrain en culture en observant l'aspect de la végétation, et éventuellement en tenant compte à l'avance de paramètres climatiques.

Des méthodes récentes font appel à des modèles mathématiques qui prennent en compte les indications de capteurs sensibles à des grandeurs liées au sol, telles que l'humidité relative de celui-ci à différents niveaux, ainsi que de capteurs sensibles à des grandeurs liées à l'atmosphère, telles que température, ensoleillement, vent et humidité de l'air. Ces méthodes se heurtent à des problèmes relatifs à la fiabilité des mesures faites dans le sol, à l'hétérogénéité de celui-ci, et à la connaissance imparfaite qu'on a du comportement souterrain de la végétation.

Il paraît donc qu'il serait avantageux de pouvoir commander l'irrigation à partir d'un paramètre lié au comportement de la plante elle-même.

Le plus logique serait évidemment de s'appuyer sur une détermination du « potentiel hydrique » de la plante, c'est-à-dire de la pression de la sève. Malheureusement, la seule méthode de mesure qui donne des résultats acceptables est une méthode destructive, elle consiste à couper une partie de tige, à enfermer l'extrémité du tronçon restant en place dans une enceinte dont on fait varier la pression jusqu'à la limite d'apparition d'un ménisque sur la surface de coupe. Une telle méthode est difficilement utilisable en pratique pour un pilotage automatique.

Un article du « United States Department of Agriculture », Agricultural Research Service, 1983, intitulé « Pumping air through leaves indicates plant stress », propose de mesurer la pression d'air nécessaire pour traverser une feuille de façon à détecter un déficit en eau justifiant l'irrigation.

Un tel procédé, qui n'est d'ailleurs pas décrit de façon détaillée, présente l'inconvénient d'effectuer la mesure sur une surface très petite, soumise à des conditions qui peuvent varier sensiblement d'une feuille à l'autre. En outre, une feuille est un organe très fragile sur lequel il est difficile d'installer à demeure un dispositif de mesure dont la présence risquerait d'ailleurs de perturber le fonctionnement stomatique en faisant perdre toute représentativité à la mesure.

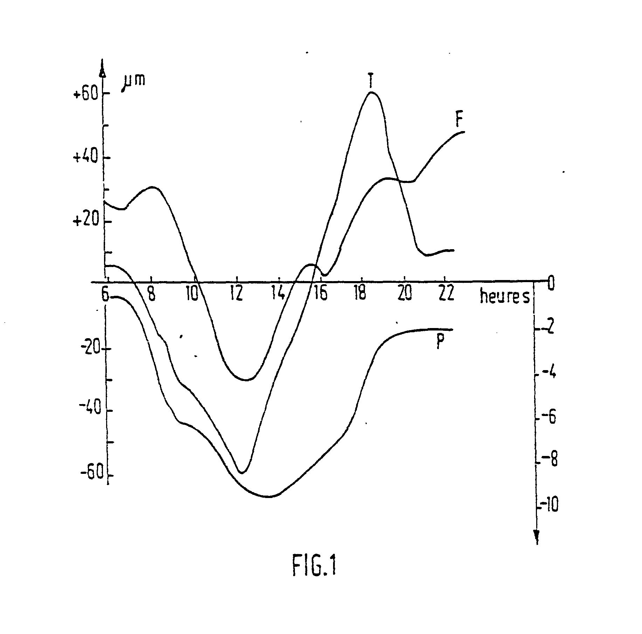

Une communication faite par MM. D. B. B. Powel et Martin René Thorpe au 5e Symposium de Long Ashton les 12-17 avril 1975, sous le titre « Dynamic aspects of plant water relations » fait état d'une expérience menée pendant 16 h consécutives et consistant à déterminer en même temps les variations de diamètre du tronc et du fruit sur un pommier, ainsi que celles du potentiel hydrique, au cours de la partie d'une journée où le soleil est levé. Ces chercheurs ont constaté que ces paramètres présentent des variations mesurables (cf. Fig. 1) mais qu'il n'existe entre elles qu'une corrélation très approximative : le potentiel hydrique commence à décroître dès l'apparition de la lumière et présente un minimum vers 14 h et croît ensuite jusque vers 20 h ; le diamètre du tronc commence à décroître également dès 6 h, il présente un minimum vers 12 h, nettement avant celui du potentiel hydrique et un maximum vers 18 h ; le diamètre du fruit ne commence à décroître que vers 8 h 1/2 nettement après celui du tronc, il présente un minimum au même moment que celui du tronc, suivi d'une croissance à peu près régulière jusqu'à la fin du jour.

Cette expérience permet seulement de voir qu'il n'y a pas corrélation étroite entre les grandeurs mesurées. On prévoit qu'une insuffisance d'irrigation aura une répercussion sur le potentiel hydrique, mais il n'est pas possible de savoir de quelle manière cela pourra se traduire sur les autres grandeurs mesurées.

On connaît aussi, par le Certificat d'Auteur soviétique SU-A-252.340, un procédé de commande automatique d'irrigation dans lequel on mesure simultanément la vitesse d'écoulement de la sève dans une tige et le diamètre de cette tige au moyen de capteurs fournissant des signaux représentatifs des deux grandeurs mesurées à un bloc de commande logique comprenant des moyens de mémorisation des signaux reçus et des moyens de comparaison de chaque signal avec le signal précédent mémorisé. Le bloc de commande détermine ainsi le sens de variation des deux grandeurs mesurées et commande l'irrigation lorsqu'il enregistre en même temps une décroissance de la vitesse d'écoulement de la sève et une décroissance du diamètre de la tige.

Un tel système nécessite donc la mesure de la vitesse d'écoulement de la sève et cette mesure est beaucoup plus difficile à réaliser que celle du diamètre.

En outre, l'irrigation peut être commandée sans répondre à un réel besoin, par suite de variations aléatoires des grandeurs mesurées.

La présente invention a pour but de fournir un procédé efficace de commande de l'irrigation qui réponde aux besoins réels des plantes, de façon à ajuster de façon plus précise qu'actuellement l'alimentation à ces besoins.

L'invention fournit donc un procédé d'irrigation de cultures végétales, qui comprend les étapes suivantes :

a) mesure des variations journalières d'une grandeur liée aux besoins et ressources en eau d'une partie déterminée du végétal ;

b) détermination de l'amplitude maximale des variations journalières de cette grandeur qui correspond à une absence de nécessité d'irrigation, compte tenu des influences climatiques ;

c) fixation d'un seuil pour ladite grandeur, tel que, si cette grandeur dépasse ledit seuil, un déficit d'irrigation peut être présumé ;

d) déclenchement de l'irrigation commandé par un signal traduisant le dépassement dudit seuil.

Suivant une modalité préférée en culture fruitière, ladite grandeur, objet des mesures est le diamètre d'un fruit et ledit seuil correspond à une diminution de ce diamètre.

Suivant une autre modalité, convenant pour les cultures non fruitières, ou pour celles où le fruit est petit ou d'accès difficile, ladite grandeur, objet des mesures, est le diamètre du tronc ou d'une tige, et ledit seuil correspond à une diminution de ce diamètre.

Suivant un premier mode opératoire, ladite grandeur est mesurée sur une partie du végétal qui a été isolée de la photosynthèse et le seuil est fixé en prenant pour point de départ la valeur de ladite grandeur au moment de l'opération d'isolement de la photosynthèse.

Suivant un mode opératoire généralement préféré un peu plus compliqué au niveau de l'appareillage mais plus simple pour la mise en œuvre sur le terrain, ladite grandeur est mesurée sur une partie du végétal qui reste reliée à la photosynthèse et le seuil est fixé en prenant pour point de départ une valeur de ladite grandeur prise dans la précédente variation journalière, de préférence une valeur extrême atteinte au cours de la nuit précédente (à partir de 0 h).

Avantageusement dans ce cas le point de départ pour la fixation du seuil correspond à un maximum pour ladite grandeur si un déficit d'irrigation se traduit par un abaissement de la valeur de cette grandeur.

Pour une simplification avantageuse, on prévoit que le déclenchement de l'irrigation correspond à l'envoi sur, ou dans le sol d'une quantité d'eau fixée, prédéterminée.

L'invention couvre également un dispositif de commande automatique de l'irrigation des végétaux comprenant :

— au moins un moyen de mesure du diamètre d'au moins une partie spécifique du végétal reflétant les besoins en eau de ce végétal et fournissant un signal représentatif du diamètre mesuré ;

— un bloc de commande relié audit moyen et comportant des moyens de comparaison du signal de mesure du diamètre avec un signal mémorisé et des moyens d'émission, en fonction du résultat de la comparaison, d'un signal de commande ;

— des moyens d'irrigation reliés au bloc de commande et comportant au moins une vanne de commande de l'irrigation répondant auxdits signaux de commande.

Un élément important du dispositif selon l'invention, lorsque la grandeur objet des mesures est le diamètre du fruit ou de la tige, branche ou tronc est le capteur de dimension sensible à ses variations. Ces variations sont de l'ordre de la dizaine à quelques centaines de micromètres au cours d'une même journée, il est donc nécessaire de pouvoir détecter des variations avec une précision minimale de quelques microns, sinon une fraction de micron, et ceci non pas dans les conditions de calme d'un laboratoire, mais en plein air, l'objet à étudier étant donc soumis à des contraintes extérieures telles que la pluie et le soleil et surtout secoué parfois très violemment par le vent, qui peut provoquer des chocs avec d'autres branches. Des capteurs de déplacement utilisables dans la gamme des mesures concernée se trouvent dans le commerce, mais il n'existe pas, à la connaissance des inventeurs, de moyens susceptibles de les maintenir dans une position invariable par rapport à l'objet à étudier, dans les conditions difficiles qu'on vient d'exposer, si l'on tient compte du fait qu'un déplacement relatif d'un micromètre est de l'ordre de grandeur des phénomènes qu'on veut mesurer. On peut ajouter que les jauges de contrainte se sont révélées inutilisables du fait des difficultés de collage de celles-ci sur la surface d'un organisme vivant en obtenant à la fois une adhérence durable et une absence de réaction parasites sur cet organisme lui-même.

La présente invention apporte également une solution à ce problème en proposant un moyen de mesure qui soit d'une précision convenable et en même temps d'une fiabilité acceptable même par fortes intempéries.

Dans un mode de réalisation préférentiel, le moyen de mesure des variations de diamètre de la partie spécifique du végétal comprend :

— un capteur de déplacement linéaire composé d'une première pièce et d'une seconde pièce mobiles linéairement l'une par rapport à l'autre et associées à des moyens sensibles au déplacement relatif desdites pièces pour l'émission d'un signal de mesure ;

— un support de maintien de ladite première pièce dans une position invariable par rapport à une première partie de l'objet à étudier, constitué par un anneau rigide en matière à faible coefficient de dilatation, solidaire de ladite première pièce, et des moyens élastiques capables d'exercer en permanence sur l'objet à étudier une force tendant à pousser ledit objet vers une zone dudit anneau qui est à peu près diamétralement opposée à ladite première pièce, et

— un moyen de maintien de ladite seconde pièce dans une position invariable par rapport à une seconde partie de l'objet, les variations de situation relative desdites première et seconde parties de l'objet constituant les variations de diamètre à mesurer.

Avantageusement, dans le cas où le capteur est destiné à coopérer avec un objet de forme générale à peu près sphérique, tel qu'un fruit, il est prévu une pièce d'appui ayant à peu près la forme d'une bague circulaire située dans un plan perpendiculaire à celui de l'anneau et ayant son axe dirigé vers la première pièce, cette pièce d'appui étant solidaire dudit anneau.

De préférence, dans ce cas, lesdits moyens élastiques sont constitués de plusieurs ressorts placés en des points différents de l'anneau et exercent des forces qui convergent vers le centre de l'anneau, et la position de la pièce d'appui est réglable pour permettre d'immobiliser l'objet à étudier à peu près au centre de l'anneau.

Avantageusement, dans le cas où le capteur est particulièrement destiné à coopérer avec un objet allongé, tel qu'une branche dans la zone dudit anneau qui est diamétralement opposée à la première pièce, l'anneau a une forme en V avec un rayon minimal inférieur à celui de l'objet à étudier.

De préférence, dans ce cas l'anneau a une longueur appréciable, par rapport à son diamètre et s'étend de part et d'autre de l'emplacement de la première pièce, et les moyens élastiques comprennent au moins deux ressorts placés de part et d'autre de la première pièce, dans le sens de la longueur de l'anneau.

Dans les deux cas, l'expérience a montré qu'il est préférable de prévoir que les moyens de maintien pour maintenir la seconde pièce par rapport à la seconde partie de l'objet comprennent un moyen adhésif placé entre lesdites seconde pièce et seconde partie. En effet, la technique classique utilisant un ressort s'est révélé inopérante lorsqu'il y a des secousses.

Un autre dispositif de mesure de diamètre d'un fruit, tige, branche ou tronc peut être constitué de façon plus simple par un bracelet élastique, disposé de façon à entourer l'organe dont on veut mesurer les variations dimensionnelles, et pourvu de jauges d'extensométrie. Un tel dispositif convient particulièrement bien lorsque l'organe à étudier présente une surface lisse et glissante, en revanche il peut donner des résultats moins certains avec une surface rugueuse, car alors l'allongement et/ou la rétraction du bracelet peut présenter des saccades. Le bracelet peut être constitué par une pièce métallique souple en forme d'anneau ouvert, en appui sur l'organe considéré par deux ou plusieurs points de sa face interne.

L'invention va maintenant être exposée plus en détail à l'aide d'exemples pratiques, illustrés aux dessins, parmi lesquels :

— Fig. 1 est un diagramme montrant les variations du potentiel hydrique et des diamètres de tronc et fruit en fonction du temps ;

— Fig. 2 est un diagramme montrant les variations de diamètre de fruits en fonction du temps ;

— Fig. 3 est un diagramme montrant les variations du diamètre d'un fruit en fonction du temps ;

— Fig. 4 est une vue schématique d'une installation pour la mise en œuvre du procédé de l'invention ;

— Fig. 5 est une vue en élévation d'un premier mode de réalisation du capteur de déplacement ;

— Fig. 6 est une vue en perspective d'un second mode de réalisation du capteur de déplacement.

La Fig. 1 est extraite de la publication de Powel et Thorpe discutée plus haut, les courbes T et F montrent les variations diurnes du diamètre, en micromètres, et la courbe P celles du potentiel hydrique, en bar, au cours de l'expérience.

Les études faites par les inventeurs ont permis de comprendre dans l'ensemble les raisons de la médiocre corrélation observée entre le potentiel hydrique et les dimensions du végétal. La principale de ces raisons doit être cherchée dans les échanges qui ont lieu entre le fruit (par exemple) et les feuilles, ces échanges portant sur des transferts du sucre et autres substances nourricières depuis les feuilles, où elles sont élaborées par photosynthèse, vers le fruit et également sur des transferts d'eau en sens inverse au cas où l'alimentation en provenance des racines est insuffisante.

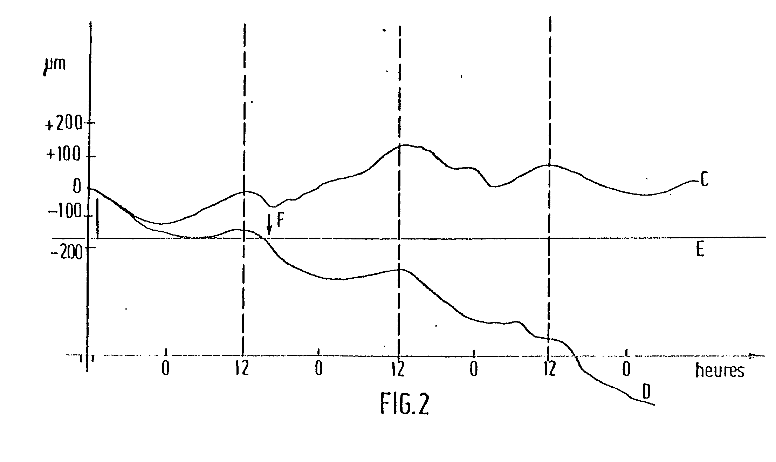

La Fig. 2 montre le résultat d'une expérience faite par les inventeurs : des fruits ont été isolés de la photosynthèse, par enlèvement des feuilles de la branche qui les porte, et sectionnement d'un anneau d'écorce à la base de cette branche. On constate alors que, dans des conditions normales d'irrigation (courbe C), la croissance du fruit est interrompue et que son diamètre demeure à peu près constant, avec seulement des variations diurnes. Au contraire, si la plante souffre d'une irrigation insuffisante (courbe D), les dimensions du fruit montrent une décroissance régulière à laquelle se superposent des variations diurnes d'amplitude comparables à celles qu'on observe avec une irrigation normale.

On peut déduire de cette expérience une méthode pour donner l'alerte en cas de déficit d'irrigation et commander éventuellement l'envoi d'eau vers la plante. Cette méthode consiste à isoler un fruit de la photosynthèse par exemple de la manière indiquée ci-dessus, à observer ou enregistrer les variations de diamètre du fruit et à déclencher l'alerte et/ou la mise en route de l'irrigation lorsque ce diamètre descend au-dessous d'un seuil déterminé à l'avance (droite E et flèche F). Cette méthode est cependant délicate à mettre en œuvre, car l'opération consistant à isoler un fruit de la photosynthèse exige un personnel expérimenté.

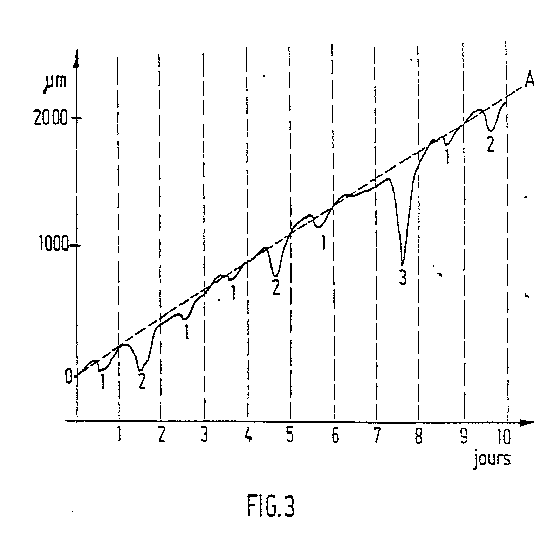

La méthode préférée consiste donc à opérer sur une partie du végétal qui reste reliée à la photosynthèse. La Fig. 3 illustre ce mode opératoire. Cette figure montre les variations du diamètre d'un fruit, enregistrées sur une dizaine de jours. On constate qu'à une croissance régulière, matérialisée par la droite en tirets A, se superposent des variations journalières correspondant à un minimum de diamètre vers le milieu de la journée.

Certains de ces minima, repérés par 1, sont peu accusés de l'ordre de 100 microns, et correspondent à des journées fraiches et/ou peu ensoleillées, où l'évaporation est réduite. D'autres, repérés par 2, sont plus accentués (200 à 300 microns environ) et correspondent à des jours de fort ensoleillement. On observe que les minima accentués donnent lieu à une récupération nocturne, et même à une croissance journalière totale plus intense que pour les journées à faible ensoleillement, ce qui traduit une photosynthèse plus intense.

La courbe présente en 3 un minimum beaucoup plus accusé, qui a motivé, en même temps que l'observation visuelle de l'état de sécheresse du sol, un envoi d'eau supplémentaire. Celui-ci a entraîné une remontée quasi-immédiate (après quelques minutes seulement) du diamètre, et a permis le retour de la courbe à la droite A qui représente la croissance moyenne. On voit donc qu'en plaçant le seuil de décroissance du diamètre à une valeur de l'ordre de 400 à 500 microns, on peut déclencher l'irrigation à temps pour éviter des dégâts irréparables à la récolte, tout en évitant une irrigation inutile alors que la plante n'en a plus besoin.

On notera aussi qu'il n'y a pas besoin de capter les paramètres climatiques, la plante agissant par elle-même comme capteur, et intégrant tous les paramètres qui lui sont utiles, et seulement dans la proportion où ils sont.

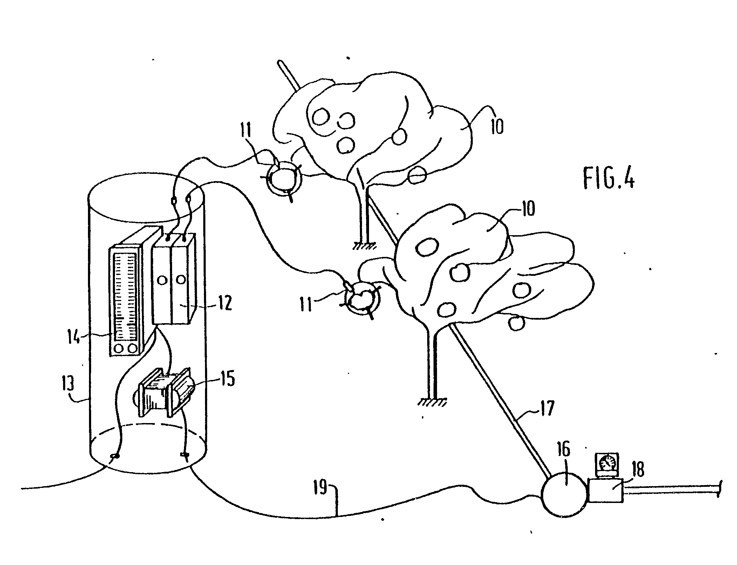

La Fig. 4 est une vue schématique d'ensemble d'une plantation irriguée selon le procédé de l'invention.

Deux arbres 10 de la plantation sont équipés de capteurs de variation de diamètre 11, placés chacun sur un fruit. De tels capteurs seront décrits plus loin. Ces capteurs sont reliés à un bloc de commande 12 placé dans un coffret 13 qui se présente dans la pratique sous la forme d'un ensemble de faibles dimensions, hauteur 600 mm, diamètre 200 mm. Les caractéristiques du bloc de commande, dans une réalisation qui n'est bien entendu donnée qu'à titre purement indicatif, sont indiquées par le tableau suivant :

— Alimentation 24 volts alternatifs
— Période de scrutation : 24 h (heure de départ programmable)
— Pas de scrutation : 30 minutes
— 4 voies
— Etendue de mesure : ± 5 volts
— Sensibilité : 10 mV
— Détection du maximum entre 0 h et 12 h
— Mesure de l'amplitude, comparaison avec amplitude de référence
— Détection du minimum sur toute la plage : 24 h
— Affichage valeur brute actuelle (commutation manuelle pour la lecture des différentes voies) 4 digits + signes
— Sortie courant continu stabilisé (12 V) pour alimenter les capteurs
— Amplitude de référence réglable
— Fermeture d'un contact, à la première voie qui dépasse l'amplitude de référence.

Ce contact, par relais interposés, déclenche l'irrigation.

Composants principaux :
— Microprocesseur 6809 8 bits Motorola
— RAM 2 K octets
— REPROM 4 K octets
— 4 entrées analogiques par convertisseur tension-fréquence (équivalence 12 bits).

Ce bloc de commande est prévu pour coopérer avec des capteurs de la série CD25 fabriquée par Enertec-Schlumberger ou analogues.

Dans le cas où les variations de dimensions sont mesurées sur un organe séparé de la photosynthèse, le boîtier est équipé, au lieu du détecteur d'amplitude décrit plus haut, d'un millivoltmètre à seuil réglable 14, de préférence à échelle lumineuse, par exemple du type ENA 100 F de la Société A.O.I.P.

Le boîtier comprend en outre un transformateur 15 ayant une sortie en 24 V.

En dehors du boîtier de commande, le dispositif de commande immédiate de l'irrigation comprend une électro-vanne 16 placée sur un conduit d'irrigation 17, et un volucompteur 18. L'ouverture de l'électro-vanne est commandée par le bloc de commande 12 grâce à un câble de liaison 19, et sa fermeture par le volucompteur, qui entre en action après qu'une quantité fixée à l'avance a été délivrée. Il n'est pas nécessaire, en effet de faire varier cette quantité en fonction des besoins momentanés des plantes, à condition que la quantité d'eau prévue puisse au moins suffire aux besoins maximaux d'une journée. Selon les circonstances, les arbres-pilotes 10 déclencheront eux-mêmes l'irrigation le lendemain ou un autre jour de la suite, selon les besoins. Le nombre d'arbres 10 et de capteurs 11 est ici de deux. On notera que l'appareillage décrit est prévu pour quatre capteurs. La détermination du nombre convenable est du ressort de l'opérateur.

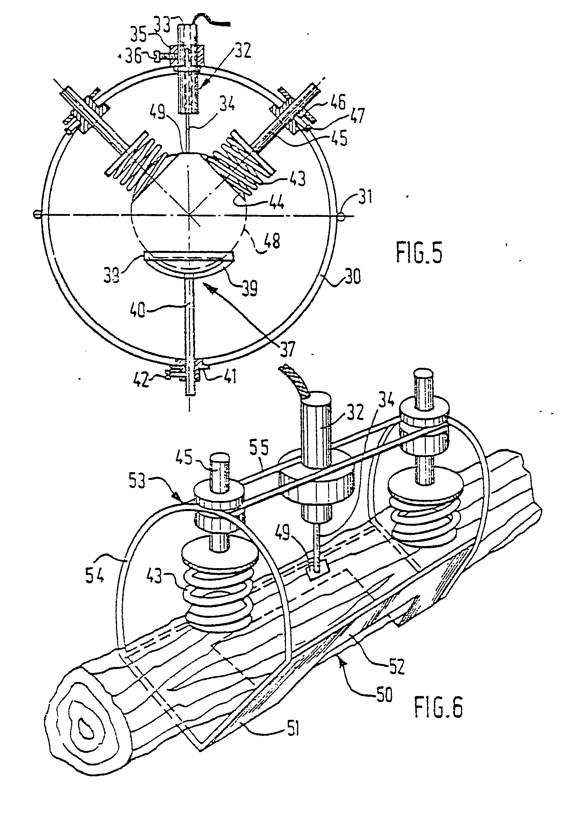

La Fig. 5 montre un capteur destiné à mesurer les variations de dimensions de fruits tels que des pommes, des oranges ou analogues, encore qu'il soit possible de modifier sa taille pour l'adapter à des fruits de dimensions différentes. L'anneau 30 est en métal « Invar »* à coefficient de dilatation pratiquement nul dans les conditions habituelles. Il est formé de deux cercles parallèles fermés, reliés entre eux par des entretoises 31 et par les fixations des différentes autres pièces dont on va parler.

Le capteur proprement dit 32, qui est dans une réalisation pratique du type CD25 de la société Enertec, comporte une première pièce ou corps 33, cylindrique, comportant des bobinages destinés à être alimentés en courant de fréquence 1 à 20 hKz et une seconde pièce ou tige 34, qui coulisse dans le corps. Le corps est monté dans un alésage d'un bloc-support 35, solidaire de l'anneau 30 et muni d'une vis de blocage 36, ce bloc support est disposé de telle façon que la tige peut se déplacer en direction du centre géométrique de l'anneau 30.

Une pièce d'appui également en « Invar » 37 est constituée d'une bague 38 solidaire d'un étrier 39, lui-même soutenu par une tige 40 qui peut coulisser dans l'alésage d'un second bloc-support 41 fixe sur l'anneau 30 en un point diamétralement opposé au bloc-support 35 du capteur 32, et pourvu également d'une vis de blocage 42. La pièce d'appui peut ainsi être déplacée en direction du centre géométrique de l'anneau 30, et immobilisée dans la position choisie.

Deux ressorts à boudin 43, travaillant à la compression portent à une de leurs extrémités une coupelle concave 44 et sont supportées à l'extrémité opposée par une tige 45, dirigée vers

* Marque déposée.

le centre géométrique de l'anneau 30 et réglable en position radiale par rapport à cet anneau grâce à un bloc support 46 et une vis de blocage 47. Les blocs supports sont situés sensiblement à 120° du bloc support 41.

On a porté sur la figure un cercle en tirets qui représente le contour du fruit 48 en cours d'étude. On constate qu'il est sensiblement maintenu au centre de l'anneau 30 par la pièce d'appui.

La liaison entre le fruit 48 et la tige 34 du capteur est assurée simplement par un petit morceau de ruban collant double-face 49.

On notera que le dispositif ne mesure pas exactement les variations du diamètre du fruit 48, mais celles de la distance entre le plan de la bague 39 et l'extrémité de la tige 34.

Attendu que ces grandeurs sont étroitement liées, la différence est sans importance.

La Fig. 6 est relative à une autre réalisation du capteur, destinée à coopérer avec un objet de forme allongée telle qu'une tige, branche ou tronc. Les mêmes références y désignent les mêmes pièces que sur la Fig. 5.

L'anneau 30, présente une forme différente de celle de la Fig. 5, pour tenir compte de la forme de l'objet et des problèmes de mise en place. Il comporte deux pièces, toutes deux en « Invar » : un berceau 50 à section transversale en V est composé de deux parties terminales 51 reliées par deux entretoises 52. Une voûte 53 est également formée de deux arceaux terminaux 54 à peu près en demi-cercle reliés par des entretoises 55. Les arceaux sont articulés par une de leurs extrémités sur le berceau 50, et leur extrémité opposée est reliée au berceau de façon amovible pour permettre l'introduction d'une branche à l'intérieur de l'ensemble.

Le capteur proprement dit 32 est porté par les entretoises 55, et les ressorts 43 sont également portés par les mêmes entretoises, de part et d'autre du capteur dans le sens longitudinal. La tige 34 du capteur et celles des ressorts 43 sont dirigées vers le milieu du V formé par le berceau 50. On constate que le berceau 50 joue à la fois le rôle d'une partie de l'anneau 30 et celui de la pièce d'appui 37. En effet, une branche 56 vient directement en appui sur ce berceau.

**Revendications**

1. Procédé d'irrigation de cultures végétales, caractérisé en ce qu'il comprend les étapes suivantes :

a) mesure de variations journalières d'une grandeur liée aux besoins et ressources en eau d'une partie déterminée du végétal, et révélatrice des besoins et ressources en eau de l'ensemble de végétal ;

b) détermination de l'amplitude maximale des variations journalières de cette grandeur qui correspond à une absence de nécessité d'irrigation, compte tenu des influences climatiques ;

c) fixation d'un seuil pour ladite grandeur, tel que, si cette grandeur dépasse ledit seuil, un déficit d'irrigation peut être présumé ;

d) déclenchement de l'irrigation commandé par un signal traduisant le dépassement dudit seuil.

2. Procédé selon la revendication 1, caractérisé en ce que ladite grandeur est mesurée sur une partie du végétal qui a été isolée de la photosynthèse, et en ce que le seuil est fixé en prenant pour point de départ la valeur de ladite grandeur au moment de l'opération d'isolement de la photosynthèse.

3. Procédé selon la revendication 1, caractérisé en ce que ladite grandeur est mesurée sur une partie du végétal qui reste reliée à la photosynthèse et en ce que le seuil est fixé en prenant pour point de départ une valeur de ladite grandeur prise dans la précédente variation journalière, de préférence une valeur extrême atteinte au cours de la nuit précédente (à partir de 0 h).

4. Procédé selon la revendication 3, caractérisé en ce que le point de départ pour la fixation du seuil correspond à un maximum pour ladite grandeur si un déficit d'irrigation se traduit par un abaissement de la valeur de cette grandeur.

5. Procédé selon la revendication 4, caractérisé en ce que le déclenchement de l'irrigation correspond à l'envoi sur ou dans le sol d'une quantité d'eau fixe, prédéterminée.

6. Dispositif de commande automatique de l'irrigation de végétaux comprenant :

— au moins un moyen (11, 32) de mesure du diamètre d'au moins une partie spécifique (48) du végétal (10) reflétant les besoins en eau de ce végétal et fournissant un signal représentatif du diamètre mesuré ;

— un bloc de commande (12) relié audit moyen de mesure (11, 32) et comportant des moyens de comparaison du signal de mesure du diamètre avec un signal mémorisé et des moyens d'émission, en fonction du résultat de la comparaison, d'un signal de commande ;

— des moyens d'irrigation (16, 17, 18) reliés au bloc de commande (12) et comportant au moins une vanne de commande de l'irrigation (16) répondant auxdits signaux de commande ; caractérisé par le fait :

que le moyen (11, 32) de mesure du diamètre est associé à des moyens d'enregistrement des variations journalières du diamètre mesuré et

que le signal mémorisé dans le bloc de commande (12) correspond à un seuil déterminé à l'avance de décroissance du diamètre mesuré, ledit seuil étant tel que, s'il est dépassé, un déficit d'irrigation peut être présumé.

7. Dispositif de commande d'irrigation selon la revendication 6, caractérisé par le fait que le bloc de commande (12) fonctionne par périodes de 24 h et comprend des moyens de détermination de la valeur maximale du diamètre mesuré sur les 12 premières heures et des moyens de soustraction d'une quantité préfixée à ladite valeur maximale pour la détermination dudit seuil de décroissance.

8. Dispositif de commande d'irrigation selon l'une des revendications 6 et 7, caractérisé par le fait que le moyen de mesure des variations du diamètre de la partie spécifique (48) du végétal (10) comprend :

— un capteur de déplacement linéaire (32) composé d'une première pièce (33) et d'une seconde pièce (34) mobiles linéairement l'une par rapport à l'autre et associées à des moyens sensibles aux déplacements relatifs desdites pièces pour l'émission d'un signal de mesure,

— un support (30, 37, 43) de maintien de ladite première pièce (33) dans une position invariable par rapport à une première partie de l'objet (48) à étudier, constitué par un anneau rigide (30) en matière à faible coefficient de dilatation, solidaire de ladite première pièce (32), et des moyens élastiques (43) capables d'exercer en permanence sur l'objet (48) à étudier une force tendant à pousser ledit objet (48) vers une zone dudit anneau (30) (50, 53) qui est à peu près diamétralement opposée à ladite première pièce, et

— un moyen (49) de maintien de ladite seconde pièce dans une position invariable par rapport à une seconde partie de l'objet (48), les variations de situation relative desdites première et seconde parties de l'objet (48) constituant les variations de diamètre à mesurer.

9. Dispositif selon la revendication 8, et dont le capteur de déplacement est destiné à coopérer avec un objet (48) de forme générale à peu près sphérique tel qu'un fruit, caractérisé en ce qu'il est prévu une pièce d'appui (37) ayant à peu près la forme d'une bague circulaire située dans un plan perpendiculaire à celui de l'anneau et ayant son axe dirigé vers la première pièce, cette pièce d'appui étant solidaire dudit anneau (30).

10. Dispositif selon la revendication 9, caractérisé en ce que lesdits moyens élastiques sont constitués de plusieurs ressorts (43) placés en des points différents de l'anneau (30) et exercent des forces qui convergent sur le centre de l'anneau et en ce que la position de la pièce d'appui (37) est réglable pour permettre d'immobiliser l'objet à étudier à peu près au centre de l'anneau.

11. Dispositif selon la revendication 10, et dont le capteur de déplacements est particulièrement destiné à coopérer avec un objet allongé tel qu'une tige, caractérisé en ce que dans la zone dudit anneau qui est diamétralement opposée à la première pièce (33), l'anneau (50, 53) a une forme en V avec un rayon minimal inférieur à celui de l'objet à étudier.

12. Dispositif selon la revendication 11, caractérisé en ce que l'anneau (50, 53) a une longueur appréciable par rapport à son diamètre et s'étend de part et d'autre de l'emplacement de la première pièce, et en ce que les moyens élastiques comprennent au moins deux ressorts (43) placés de part et d'autre de la première pièce (33), dans le sens de la longueur de l'anneau (50, 51).

13. Dispositif selon l'une des revendications 8 à 12, caractérisé en ce que dans le capteur de déplacements, les moyens de maintien de la seconde pièce (34) par rapport à la seconde partie de l'objet (48) comprennent un moyen adhésif (49) placé entre lesdites seconde pièce (34) et seconde partie de l'objet (48).

14. Dispositif de commande d'irrigation selon l'une des revendications 6 et 7, dans lequel la partie spécifique (48) du végétal (10) est constituée par un fruit, une tige ou le tronc, caractérisé en ce que le moyen de mesure des variations du diamètre de ladite partie spécifique (48) comprend un bracelet élastique entourant ledit fruit, tronc ou tige, et au moins une jauge extensométrique disposée pour émettre un signal de réponse à une variation de forme ou de longueur périphérique dudit bracelet.

## Claims

1. Method for irrigating vegetable crops, characterized in that it comprises the following stages :

a) measurement of daily variations of a parameter linked to water requirements and supplies of a specific part of the plant and which demonstrates the water requirements and supplies of the entire plant ;

b) determination of the maximum amplitude of the daily variations of this parameter which corresponds to an absence of a need for irrigation, taking into account climatic influences ;

c) fixing of a threshold for the said parameter such that, if this parameter exceeds the said threshold, a lack of irrigation may be assumed ;

d) triggering of the irrigation controlled by a signal indicating threshold has been exceeded.

2. Method according to Claim 1, characterized in that the said parameter is measured on a part of the plant which has been isolated from photosynthesis, and in that the threshold is fixed by taking as the starting point the value of the said parameter at the time of the photosynthesis isolation operation.

3. Method according to Claim 1, characterized in that the said parameter is measured on a part of the plant which remains linked to photosynthesis, and in that the threshold is fixed by taking as the starting point a value of the said parameter taken from the preceding daily variation, preferably an extreme value attained during the previous night (from 0 hour).

4. Method according to Claim 3, characterized in that the starting point for fixing the threshold corresponds to a maximum for the said parameter if a lack of irrigation is reflected in a lowering of the value of this parameter.

5. Method according to Claim 4, characterized in that the triggering of irrigation corresponds to sending a fixed, predetermined amount of water onto or into the soil.

6. Device for automatic control of plant irrigation comprising :

— at least one means (11, 32) for measuring the diameter of at least one specific part (48) of the plant (10) demonstrating the water requirements of this plant and supplying a signal representing the measured diameter ;

— a control unit (12) linked to the said measuring means (11, 32) and comprising means for comparing the diameter measurement signal with a memorized signal and transmission means, as a function of the result of the comparison, of a control signal ;

— irrigations means (16, 17, 18) linked to the control unit (12) and comprising at least one irrigation control valve (16) responding to the said control signals ; characterized in that :

the means (11, 32) for measuring the diameter is associated with means for recording daily variations in the measured diameter, and the signal memorized in the control unit (12) corresponds to a predetermined threshold of reduction in the measured diameter, the said threshold being such that, if it is exceeded, a need for irrigation may be assumed.

7. Device for controlling irrigation according to Claim 6, characterized in that the control unit (12) operates in 24 hours periods and comprises means for determining the maximum value of the measured diameter over the first 12 hours and means for subtracting a predetermined amount from the said maximum value in order to determine the said reduction threshold.

8. Device for controlling irrigation according to either of Claims 6 and 7, characterized in that the means for measuring variations in diameter of the specific part (48) of the plant (10) comprises :

— a linear displacement sensor (32) comprising a first part (33) and a second part (34) which move linearly with respect to one another and which are associated with means which are sensitive to the relative displacement of the said parts for the transmission of a measurement signal,

— a support (30, 37, 43) for holding the said first part (33) in an unchangeable position with respect to a first part of the object (48) being studied, consisting of a rigid ring (30) in a material with a low coefficient of expansion and which is integral with the said first part (32), and elastic means (43) which are capable of permanently exerting a force on the object (48) being studied, which force tends to push the said object (48) towards a zone of the said ring (30) (50, 53) which is approximately diametrically opposite the said first part, and

— a means (49) for holding the said second part in an unchangeable position with respect to a second part of the object (48), the variations in relative position of the said first and second parts of the object (48) forming the variations in diameter to be measured.

9. Device according to Claim 8, the displacement sensor of which is intended to interact with an object (48) with a shape that is generally approximately spherical, such as a fruit, characterized in that a support part (37), having approximately the shape of a circular collar located in a plane perpendicular to that of the ring and with its axis directed towards the first part, is provided, this support part being integral with the said ring (30).

10. Device according to Claim 9, characterized in that the said elastic means consist of several springs (43) placed at various points on the ring (30) and which exert forces which converge on the centre of the ring, and in that the position of the support part (37) is adjustable in order to enable the object being studied to be immobilized approximately at the centre of the ring.

11. Device according to Claim 10, the movement sensor of which is particularly intended to interact with an extended object, such as a stem, characterized in that, in the zone of the said ring which is diametrically opposite the first part (33), the ring (50, 53) has a V shape with a minimum radius which is less than that of the object being studied.

12. Device according to Claim 11, characterized in that the ring (50, 53) has a length which is appreciable with respect to its diameter and extends on either side of the position of the first part, and in that the elastic means comprise at least two springs (43) located on either side of the first part (33) in the direction of the length of the ring (50, 51).

13. Device according to one of Claims 8 to 12, characterized in that the displacement sensor, the means for holding the second part (34) with respect to the second part of the object (48) comprise an adhesive means (49) located between the said second part (34) and second part of the object (48).

14. Device for controlling irrigation according to either of Claims 6 and 7, in which the specific part (48) of the plant (10) consists of a fruit, a stem or the trunk, characterized in that the means for measuring variations in the diameter of the said specific part (48) comprises an elastic bracelet surrounding the said fruit, trunk or stem, and at least one extensometer disposed in order to transmit a signal in response to a variation in shape or in peripheral length of the said bracelet.

**Patentansprüche**

1. Bewässerungsverfahren für Pflanzenkulturen, gekennzeichnet durch die folgenden Schritte :

a) Messen von täglichen Veränderungen einer Größe, die mit dem Bedarf und dem Gehalt an Wasser einer bestimmten Partie der Pflanze gekoppelt ist, und Ermitteln des Wasserbedarfs und -gehalts der gesamten Pflanze ;

b) Bestimmen der maximalen Amplitude der täglichen Veränderungen dieser Größe, die der Nicht-Notwendigkeit der Bewässerung entspricht, wobei klimatische Einflüsse berücksichtigt werden ;

c) Festlegen einer Grenze für die Größe, derart, daß, wenn die Größe die Grenze überschreitet, ein Bewässerungsdefizit angenommen werden kann ;

d) Auslösen der gesteuerten Bewässerung durch ein Signal, das das Überschreiten der Grenze ausdrückt.

2. Verfahren nach Anspruch 1, dadurch gekennzeichnet, daß die Größe an einer Partie der Pflanze gemessen wird, die von der Photosynthese isoliert worden ist, und daß die Grenze festgelegt wird, indem als Ausgangspunkt der Wert der Größe im Moment des Vorgangs des Isolierens von der Photosynthese genommen wird.

3. Verfahren nach Anspruch 1, dadurch gekennzeichnet, daß die Größe an einer Partie der Pflanze gemessen wird, die mit der Photosynthese verbunden bleibt, und daß die Grenze festgelegt wird, indem als Ausgangspunkt ein Wert der Größe genommen wird, der bei der vorhergehenden Tagesveränderung erfaßt worden ist, vorzugsweise ein extremer Wert, der im Verlauf der vorhergehenden Nacht (ab 0 Uhr) erhalten wurde.

4. Verfahren nach Anspruch 3, dadurch gekennzeichnet, daß der Ausgangspunkt für die Festlegung der Grenze einem Maximum der Größe entspricht, wenn ein Bewässerungsdefizit ein Absinken des Wertes der Größe zur Folge hat.

5. Verfahren nach Anspruch 4, dadurch gekennzeichnet, daß beim Auslösen der Bewässerung eine fixierte, vorbestimmte Menge Wasser auf oder in den Boden geleitet wird.

6. Automatische Steuervorrichtung zum Bewässern von Pflanzen, mit :
— mindestens einer Einrichtung (11, 32) zum Messen des Durchmessers mindestens einer bestimmten Partie (48) der Pflanze (10), wobei die Einrichtung den Wasserbedarf der Pflanze wiedergibt und ein Signal abgibt, das den gemessenen Durchmesser repräsentiert ;
— einem Steuerblock (12), der mit der Meßeinrichtung (11; 32) verbunden ist und Mittel zum Vergleichen des Meßsignals für den Durchmesser mit einem gespeicherten Signal und Mittel zum Ausgeben eines Steuersignals als Funktion des Ergebnisses des Vergleichs aufweist ;
— Bewässerungsmittel (16, 17, 18), die mit dem Steuerblock (12) verbunden sind und mindestens ein Steuerventil (16) für die Bewässerung aufweisen, das auf die Steuersignale reagiert ; dadurch gekennzeichnet,
daß die Einrichtung (11, 32) zum Messen des Durchmessers mit Mitteln zum Registrieren der täglichen Veränderungen des gemessenen Durchmessers verbunden ist, und
daß das in dem Steuerblock (12) gespeicherte Signal einer zuvor bestimmten Grenze der Abnahme des gemessenen Durchmessers entspricht, wobei die Grenze solcher Art ist, daß, wenn sie überschritten wird, ein Bewässerungsdefizit angenommen werden kann.

7. Bewässerungssteuervorrichtung nach Anspruch 6, dadurch gekennzeichnet, daß der Steuerblock (12) in Perioden von 24 Stunden arbeitet und Mittel, die den maximalen Wert des gemessenen Durchmessers für die ersten 12 Stunden bestimmen, sowie Mittel aufweist, die zur Bestimmung der Abnahme-Grenze eine im voraus festgelegte Größe von dem Maximalwert subtrahieren.

8. Bewässerungssteuervorrichtung nach einem der Ansprüche 6 und 7, dadurch gekennzeichnet, daß die Einrichtung zum Messen der Veränderungen des Durchmessers der bestimmten Partie (48) der Pflanze (10) aufweist :
— einen Meßwertgeber (32) für lineare Verstellung, der aus einem ersten Teil (33) und einem zweiten Teil (34) besteht, die linear zueinander bewegbar sind und mit Mitteln verbunden sind, die derart auf relative Verstellungen der Teile reagieren, daß sie ein Meßsignal ausgeben,
— eine Stütze (30, 37, 43), die das erste Teil (33) in bezug auf eine erste Partie des zu prüfenden Objektes (48) in einer unveränderlichen Position hält, bestehend aus einem starren Ring (30) aus einem Material mit geringem Dehnungskoeffizienten, der mit dem ersten Teil (32) fest verbunden ist, und elastischen Mitteln (43), die in der Lage sind, auf das Objekt (48) permanent eine Kraft auszuüben, die dazu tendiert, das Objekt (48) gegen einen Bereich des Rings (30) (50, 53) zu drücken, der dem ersten Teil etwa diametral gegenüberliegt, und
— eine Einrichtung (49), die das zweite Teil in bezug auf eine zweite Partie des Objektes (48) in einer unveränderlichen Position hält, wobei die Veränderungen der relativen Lage der ersten und zweiten Partien des Objektes (48) die Veränderungen des zu messenden Durchmessers bilden.

9. Vorrichtung nach Anspruch 8, bei der der Verstellungsmeßwertgeber zum Zusammenwirken mit einem im wesentlichen etwa kugelförmigen Objekt (48), wie eine Frucht, vorgesehen ist, dadurch gekennzeichnet, daß ein im wesentlichen als Kreisring ausgebildetes Stützteil (37) vorgesehen ist, das in einer zur Ebene des Ringes senkrechten Ebene 'angeordnet ist und dessen Achse gegen das erste Teil gerichtet ist, wobei das Stützteil fest mit dem Ring (30) verbunden ist.

10. Vorrichtung nach Anspruch 9, dadurch gekennzeichnet, daß die elastischen Mittel aus mehreren Federn (43) bestehen, die an verschiedenen Punkten des Ringes (30) angeordnet sind und Kräfte ausüben, die zum Zentrum des Ringes konvergieren, und dadurch, daß die Position des Stützteils (37) derart regulierbar ist, daß sich das zu prüfende Objekt im wesentlichen am Zentrum des Ringes immobilisieren läßt.

11. Vorrichtung nach Anspruch 10, bei der der Verstellungsmeßwertgeber insbesondere zum Zusammenwirken mit einem länglichen Objekt, z. B. einem Stiel, vorgesehen ist, dadurch gekennzeichnet, daß in dem Bereich des Ringes, der dem ersten Teil (33) diametral gegenüberliegt, der Ring (50, 53) V-förmig mit einem Radius ausgebildet ist, der geringfügig kleiner ist als derjenige des zu prüfenden Objektes.

12. Vorrichtung nach Anspruch 11, dadurch gekennzeichnet, daß der Ring (50, 53) eine in bezug auf seinen Durchmesser nennenswerte Länge aufweist und sich auf der einen und der anderen Seite der Position des ersten Teils erstreckt, und daß die elastischen Mittel mindestens zwei Federn (43) aufweisen, die in Längsrichtung des Ringes (50, 51) auf der einen und der anderen Seite des ersten Teils (33) angeordnet sind.

13. Vorrichtung nach einem der Ansprüche 8 bis 12, dadurch gekennzeichnet, daß in dem Verstellungsmeßwertgeber die Mittel, die das zweite Teil (34) in bezug auf die zweite Partie des Objektes (48) halten, ein Adhäsivmittel (49) aufweisen, das zwischen dem zweiten Teil (34) und der zweiten Partie des Objektes (48) angeordnet ist.

14. Bewässerungssteuervorrichtung nach einem der Ansprüche 6 und 7, bei der die bestimmten Partie (48) der Pflanze (10) aus einer Frucht, einem Stiel oder dem Stamm besteht, dadurch gekennzeichnet, daß die Einrichtung zum Messen von Veränderungen des Durchmessers der bestimmten Partie (48) einen elastischen Ring, der die Frucht, den Stamm oder den Stiel umgibt, und mindestens einen Dehnungsmesser aufweist, der zum Ausgeben eines Antwortsignals auf eine Veränderung der Form oder der Umfangslänge des Ringes vorgesehen ist.

FIG.1

FIG.2

FIG.3

FIG.4

EP 0 156 662 B1

FIG.5

FIG.6